**Europäisches Patentamt**

(19) **European Patent Office**

**Office européen des brevets**

(11) Veröffentlichungsnummer: **0 163 051**
**B1**

(12) **EUROPÄISCHE PATENTSCHRIFT**

(45) Veröffentlichungstag der Patentschrift:
**21.09.88**

(51) Int. Cl.⁴: **G 05 D 23/20,** F 25 D 31/00,
B 01 L 7/02, F 25 B 29/00

(21) Anmeldenummer: **85103767.1**

(22) Anmeldetag: **28.03.85**

(54) Verfahren und Thermostat zur Einstellung einer konstanten Temperatur für ein Fluid.

(30) Priorität: **31.03.84 DE 3412157**

(43) Veröffentlichungstag der Anmeldung:
**04.12.85 Patentblatt 85/49**

(45) Bekanntmachung des Hinweises auf die Patenterteilung:
**21.09.88 Patentblatt 88/38**

(84) Benannte Vertragsstaaten:
**BE FR GB IT NL**

(56) Entgegenhaltungen:
**DE-A-2 808 473**
**DE-A-3 237 406**
**DE-B-2 024 158**
**DE-C-896 975**
**DE-C-967 751**
**US-A-3 227 207**
**US-A-3 370 454**
**US-A-3 662 819**

(73) Patentinhaber: **Kernforschungsanlage Jülich Gesellschaft mit beschränkter Haftung, Postfach 1913, D-5170 Jülich 1 (DE)**

(72) Erfinder: **Witt, Jörg D., Gutenbergstrasse 25, D-5130 Bergheim (DE)**
Erfinder: **Schmidt, Peter, Auf den Knippen 29, D-5142 Hückelhoven (DE)**

**Beschreibung**

Die Erfindung bezieht sich auf ein Verfahren zur Einstellung einer konstanten Temperatur für ein Fluid gemäß Obergriff von Patentanspruch 1 sowie auf einen Thermostaten zur Durchführung des Verfahrens gemäß Obergriff von Patentanspruch 2. Die konstante Temperatur wird durch Aufheizen des Fluids beim Durchströmen einer Wärmequelle eingestellt. Derartige Verfahren sind z. B. aus DE-A-1 2 808 473, US-A-3 370 454 und US-A-3 662 819 bekannt.

Aus DE-C-967 751 ist ein Verfahren zur Einstellung einer konstanten Temperatur für ein Fluid bekannt, mit deren Hilfe z. B. Meßgeräte auf konstanter Temperatur gehalten werden können. In der vorgenannten Druckschrift ist angegeben, daß hier ein "Heizkörper in einem Durchlaufrohr für die Thermostatflüssigkeit angeordnet ist, das in seinem Querschnitt so eng gehalten ist, daß die Flüssigkeit mit großer Geschwindigkeit am Heizkörper vorbeiströmt, und daß letzterer einen Kern zur Speicherung der Wärme aufweist, der mit dem mit der Flüssigkeit in Wärmeaustausch stehenden Heizkörpermantel über einen als Wärmedrossel wirkenden Steg und die Heizkörperisolation wärmeleitend verbunden ist". Es wird hierbei "ein Heizkörper von vergleichsweise großer Wärmekapazität gewählt, so daß der Heizkörper gegenüber dem an ihm rasch vorheiströmenden Wasser eine nicht allzu große Schwankungen aufweisende, praktisch konstante Temperatur besitzt". Weiterhin " ist vor dem Durchlaufrohr bzw. der letzterem vorgeschalteten Förderpumpe ein Flüssigkeitsvorratsbehälter vorgesehen, in den die Flüssigkeitsrückleitung einmündet und der von einem vom Kühlmittel durchflossenen Hohlring mit vergleichsweise kleiner Kühloberfläche umgeben ist, wobei der Vorratsbehälter so klein bemessen ist, daß er bei der gegebenen Förderleistung der Pumpe innerhalb von 1 bis 1/100 Minute mit Flüssigkeit zu füllen ist. Die angestrebte konstante Temperatur des Thermostatwassers ergibt sich daher als Mittelwertstemperatur einerseits aus der annähernd konstant bleibenden Kühlung, die von dein den Vorratsbehälter umgebenden Kühlringmantel herrührt, und andererseits aus der ebenfalls nahezu konstanten Wärmeabgabe des Heizkörpers bzw. seines wärmespeichernden Kernes an das Wasser. Durch die große Wärmekapazität des Heizkörpers bzw. seines Kernes wird erreicht, daß d.ie infolge ein- und auszuschaltender Heizung unvermeidlichen Temperaturschwankungen auf ein Mindestmaß herabgedrückt werden". Hierbei nimmt der "Kern im Dauerbetrieb des Thermostaten eine Mittelwertstemperatur an, die stets über der thermostatisch einzuhaltenden Temperatur liegt, während das dem Durchlaufror zuströmende Wasser im Vorratsbehälter durch den Kühlring dauernd unter die thermostatisch zu haltende Temperatur gekühlt wird".

Eine sehr genaue Temperaturregelung bei Fluiden mit geringem Massenstrom bzw. geringer Strömungsgeschwindigkeit ist beispielsweise zur Bestimmung der Leistungsfähigkeit von Sonnenkollektoren erforderlich. Die Fluide durchströmen die Sonnenkollektoren und werden dabei aufgeheizt. Sonnenkollektoren sind Heizeinheiten, die zur Niedertemperaturheiztechnik gehören, wobei bei Sonnenkollektoren beim Aufheizen nur verhältnismäßig geringe Temperaturdifferenzen zwischen Eingangs- und Ausgangstemperatur des Fluids aufweisen. Zur Bestimmung der Verlustleistung und des Wirkungsgrades von Sonnenkollektoren kommt es deshalb auf sehr genau eingestellte Eingangstemperaturen des im Sonnenkollektor aufzuheizenden Fluids an. Nach DIN 4757/4 darf die Eingangstemperatur maximal nur ± 0,1 K von einer vorgegebenen Solltemperatur abweichen.

Das fluid wird deshalb entweder einem Badthermostaten mit entsprechenden Fluidreservoir entnommen oder es wird als Thermostat ein Wärmetauscher benutzt, mit dem die benötigte Fluidmenge mittels eines Regelkreises auf Solltemperatur eingestellt wird.

Auf Testständen zur Bestimmung des Wirkungsgraden von Sonnenkollektoren wird die im Sonnenkollektor aufgeheizte Fluidmenge im Kreislauf geführt. Der Sonnenkollektor wird bei verschieden starker und gegebenenfalls fluktuierender Sonneneinstrahlung gemessen, das Fluid wird also im Sonnenkollektor unterschiedlich aufgeheizt. Bei solchen Teständen ist deshalb der Thermostat nicht nur zur Erwärmung des Fluids vor Eintritt in den Sonnenkollektor, sondern auch zu einer Kühlung auf die vorgegebene Solltemperatur am Eingang des Sonnenkollektors geeignet. Nachteilig ist, daß das nach Durchlauf der Teststrecke unterschiedlich aufgeheizte Fluid bei seiner Rückführung im Kreislauf im Thermostaten eine unterschiedlich starke Aufheizung oder Kühlung benötigt um auf die Solltemperatur am Eingang des Sonnenkollektors erwärmt oder gekühlt zu werden. Die Thermostaten weisen daher eine sehr aufwendige Regelung auf, um die vorgeschriebene maximale Abweichung der Eingangstemperatur des Fluids am Sonnenkollektor von um ± 0,1 K einhalten zu können.

Aufgabe der Erfindung ist es, ein Verfahren zur Einstellung einer konstanten Temperatur für ein Fluid mit geringem Massenstrom zu schaffen, das eine sehr genaue Temperaturregelung bei geringer Störanfälligkeit mit geringem wirtschaftlichem Aufwand gestattet.

Diese Aufgabe wird beim Verfahren der eingangs genannten Art gemäß der Erfindung durch die in Patentanspruch 1 angegebenen Maßnahmen gelöst. Danach wird das Fluid vor Einstellung der konstanten Temperatur zunächst auf eine tiefer gelegene Temperatur abgekühlt, wobei die dabei erreichte Temperaturdifferenz zwischen konstanter Temperatur und tiefer liegender Temperatur größer ist als die Temperatur-Überschwingweite des Kühlregelkreises. Diese Maßnahmen vereinfachen das Einstellen der konstanten Temperatur, da nur die Wärmequelle mit einem hochleistungsfähigen Regler auszustatten ist. Durch die dem Neizelement vorgeschaltete Kühlstrecke wird eine Mindesttemperaturdifferenz aufrechterhalten. Die Temperaturdifferenz muß so hoch bemessen sein, daß die Temperatur-Überschwingweite des Kühlregelkreises noch unterhalb der von der Wärmequelle einzustellenden konstanten Temperatur bleibt. Unter Temperatur-Überschwingweite wird hier die bei einem Regeleinschwingvorgang des Kühlregelkreises auftretende maximale Abweichung gegenüber dem Sollwert verstanden, die sich nach einer Störgrößenänderung vorübergehend ergibt.

Ein Thermostat zur Durchführung des Verfahrens ist mit einem Kühler und mit einer Heizeinrichtung zur Erwärmung des Fluids ausgerüstet. Als Kühler dient ein vom Fluid durchströmbarer Rekuperator, der Teil eines Kühlregelkreises ist und die Ausgangstemperaturen des Fluids am Kühler bestimmt. Auch die Ausgangstemperatur des Fluids an der Heizeinrichtung ist über einen Heizregelkreis festlegbar.

Ausgehend von einem derart ausgestatteten Thermostaten ist es nach Patentanspruch 2 Kennzeichen der Erfindung, daß Kühler und Heizeinrichtung vom Fluid nacheinander durchströmt werden, wobei die Ausgangstemperatur des Fluids am Kühler auf eine Temperatur unterhalb der konstanten Temperatur am Ausgang der Heizeinrichtung eingestellt ist. Die Differenz zwischen der eingestellten tieferliegenden Temperatur am Kühler und der konstanten Temperatur an der Heizeinrichtung ist größer bemessen, als die Temperaturüberschwingweite des Kühlregelkreises. Bei dieser Ausbildung des Thermostaten ist es möglich, den Kühlregelkreis einfach zu gestalten und einen Proportionalregler zu verwenden. Lediglich die Heizeinrichtung ist mit einem präzis arbeitenden Regler, insbesondere mit einem PID-Regler hoher Qualität zu versehen.

Weitere Ausgestaltungen der Erfindung sind in Patentansprüchen 3 bis 5 angegeben. So wird im Kühlregelkreis eine Solltemperatur für den Kühler eingestellt, die in Abhängigkeit von der Isttemperatur des Fluids am Ausgang der Heizeinrichtung gesteuert ist. Dies ermöglicht eine einfache Einstellung und Anpassung des Thermostaten an veränderbare Solltemperaturen, die für das Fluid vorgegeben werden. Darüberhinaus gestattet es diese Ausbildung des Thermostaten, im Kühlregelkreis einen mechanischen Regler und im Heizregelkreis einen elektronischen Regler einzusetzen, ohne die Sollwerte für beide Regelkreise getrennt vorgeben zu müssen.

Zur Stabilisierung des Kühlkreislaufs ist es vorgesehen, dem Kühler nach Messung der Austrittstemperatur des Fluids einen Wärmetauscher nachzuschalten, der einerseits vom Kühlmittel des Kühlers vor dessen Eintritt in den Kühler und andererseits vom im Kühler gekühlten Fluid durchströmt wird. Auf diese Weise lassen sich die Temperaturunterschiede im Kühler zwischen eingeführtem Kühlmittel und austretendem Fluid vermindern.

Zur Kühlung des Fluids läßt sich der Kühler auch mit einem auf eine bestimmte Eingangstemperatur eingestellten Kühlmittel speisen. Das Kühlmittel wird dann zweckmäßig einem Badthermostaten entnommen, dessen Temperatur auf Solltemperatur eingestellt wird, die dem Kühlregelkreis vorgegeben ist.

Die Heizeinrichtung weist zweckmäßig in ihrem oberen Bereich einen Zulauf für das zu erwärmende Fluid, im unteren Bereich dessen Auslauf auf, Patentanspruch 6. Das Fluid wird so in der Heizeinrichtung entgegen der sich beim Erhitzen einstellenden natürlichen Aufwärtsbewegung geführt. Damit wird der bei geringem Massenstrom bzw. bei geringer Strömungsgeschwindigkeit auftretenden laminaren Strömung in der Heizeinrichtung entgegengewirkt und eine bessere Durchmischung des Fluids erreicht, was den Wärmeübergang und im Zusammenhang damit die Regelung verbessert. Um einen weiteren Temperaturausgleich zu erzielen ist der Heizeinrichtung noch ein Pufferbehälter für das Fluid nachgeschaltet, Patentanspruch 7. Aus dem Pufferbehälter ist das Fluid mit hoher Temperaturkonstanz entnehmbar.

Die Erfindung wird nachfolgend anhand eines Ausführungsbeispiels näher erläutert. Die Zeichnung zeigt im einzelnen:

Fig. 1 Thermostat mit Kühler und Heizrichtung,

Fig. 2 regelungstechnisches Blockschaltbild des Thermostaten nach Fig. 1.

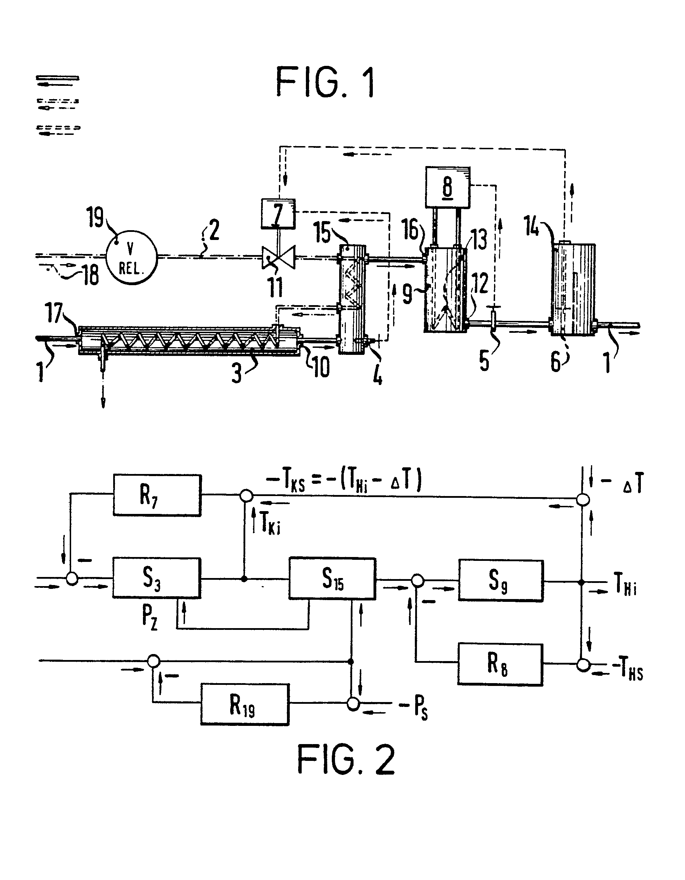

In der Zeichnung ist der Aufbau eines Thermostaten und dessen zugehörige Regelung schematisch dargestellt. In Figur 1 sind Strömung und Strömungsrichtung eines im Thermostaten zu temperierenden Fluids 1 mit durchgezogenen Linien und dunklen Pfeilen dargestellt. Die Strömung und die Strömungsrichtung eines Kühlmittels 2 für einen Kühler 3 sind mit strichpunktierter Strömungslinie und hellen Pfeilen eingezeichnet. Auch sind Signalwege eingetragen, die von Temperaturfühlern 4, 5, 6 ausgehen und zu einem P-Regler 7 (Proportionalregler) eines Kühlregelkreises beziehungsweise zu einem PID-Regler 8 (Proportional-Integral-Differenzial-Regler) eines Heizregelkreises führen. Die Signalwege sind mit gestrichelten Linien und ebenfalls dunklen Pfeilen markiert.

Zum Thermostat gehören Kühler 3 und Heizeinrichtung 9, die in Strömungsrichtung des Fluids 1 hintereinander geschaltet sind. Zur Regelung der Ausgangstemperatur des Fluids am Kühlerausgang 10 weist der Kühlregelkreis neben dem Kühler 3 den P-Regler 7, den Temperaturfühler 4 und ein hydraulisch gesteuertes Ventil 11 auf, das die Durchflußmenge des Kühlmittels 2 einstellt. Der Durchfluß des Kühlmittels 2 wird sowohl in Abhängigkeit von der Isttemperatur $T_{Ki}$ des Fluids am Kühlerausgang 10 (die Temperatur $T_{Ki}$ wird vom Temperaturfühler 4 gemessen), als auch von der Isttemperatur $T_{Hi}$ des Fluids am Ausgang 12 der Heizeinrichtung 9 geregelt. Die Temperatur $T_{Hi}$ des Fluids wird von Temperaturfühlern 5 und 6 gemessen. Im Ausführungsbeispiel gehört der Temperaturfühler 5 zum Heizregelkreis, der Temperaturfühler 6 zum Kühlregelkreis. Aus Figur 1 ist ersichtlich, daß der Heizregelkreis mit Heizeinrichtung 9 ausgehend vom Temperaturfühler 5 über den PID-Regler 8 auf ein Heizelement 13 in der Heizeinrichtung 9 einwirkt, während das Signal des Temperaturfühlers 6 dem P-Regler 7 aufgeschaltet ist. Der Temperaturfühler 5 ist am Eingang eines Pufferbehälters 14 eingesetzt, der der Heizeinrichtung 9 nachgeschaltet ist. Die Funktion von Heiz- und Kühlregelkreis wird nachfolgend anhand von Figur 2 noch näher erläutert werden.

Im Fluidkreislauf ist dem Kühler 3 im Ausführungsbeispiel noch ein Wärmetauscher 15 nachgeschaltet, der vom gekühlten Fluid 1 zwischen Kühlerausgang 10 und Eingang 16 der Heizeinrichtung durchströmt wird. Im Gegenstrom zum Fluid durchdringt den Wärmetauscher 15 das Kühlmittel 2 noch vor seinem Eintritt in den Kühler 3. Beim Durchströmen des Wärmetauschers 15 erwärmt sich das Kühlmittel und vermindert so die Temperaturdifferenz zwischen Kühlmittel und Fluid am Kühlerausgang 10. Durch diese Temperaturanpassung von Kühlmittel und Fluid werden unerwünschte Schwingungen des Kühlregelkreises vermieden. Das Fluid wird dem Kühler 3 an dessen Eingang 17 zugeführt. Das Kühlmittel 2 wird in Zufluß 18 auch hinsichtlich seines Druckes geregelt. Im Zufluß 18 befindet sich hierzu ein Druckregler 19, der im Ausführungsbeispiel zur Druckreduzierung dient.

Die Regelung des in Figur 1 dargestellten Thermostaten ist aus dem regelungstechnischen Blockschaltbild, Figur 2, ersichtlich. Im Blockschaltbild werden mit Blöcken S jeweils die Regelstrecke, mit Blöcken R die Regler bezeichnet. Zur Zuordnung von Regelstrecken S zu einzelnen Bauelementen des Thermostaten sind in den Blöcken den Symbolen S oder R als Indices jeweils die Bezugsziffern der Bauelemente aus Figur 1 hinzugefügt. So bezeichnet $S_3$ die Kühler-Regelstrecke, $S_{15}$ die Strecke des Wärmetauschers 15, $S_9$ die Heiz-Regelstrecke. Der Block $R_7$ steht für den P-Regler 7, der Block $R_8$ für den PID-Regler 8 und Block $R_{19}$ für den Druckregler 19. Zwischen der Regelstrecke $S_3$ und $S_{15}$ wird die Temperatur $T_{Ki}$ des Fluids vom Temperaturfühler 4 abgegriffen, hinter der Regelstrecke $S_9$ die Temperatur $T_{Hi}$ des Fluids am Ausgang 12 der Heizeinrichtung 9. Die Temperatur $T_{Hi}$ wird von den Temperaturfühlern 5 und 6 gemessen. Dem

Regler $R_3$ des Kühlregelkreises ist neben Temperatur $T_{Ki}$ und Temperatur $T_{Hi}$ eine konstant gehaltene Temperaturdifferenz $\Delta T$ aufgeschaltet. Diese Temperaturdifferenz $\Delta T$ ist so festgelegt, daß die vom Kühlregelkreis eingestellte Temperatur $T_{Ki}$ des Fluids auch unter Berücksichtigung der Überschwingweite des P-Reglers 7 stets unterhalb der Temperatur $T_{Hi}$ am Ausgang 12 der Heizeinrichtung beziehungsweise der Solltemperatur $T_{HS}$ des Heizregelkreises gehalten werden kann. Der Sollwert für den Kühlregelkreis ergibt sich, wie aus Figur 2 ersichtlich, aus der Isttemperatur $T_{Hi}$ des Fluids am Ausgang 12 der Heizeinrichtung 9 vermindert um die Temperaturdifferenz $\Delta T$, so daß sich als Solltemperatur $T_{KS}$ für den Kühlregelkreis der Wert einstellt:

$$T_{KS} = T_{Hi} - \Delta T.$$

Die Solltemperatur $T_{KS}$ zur Einstellung der Fluidtemperatur $T_{Ki}$ ist somit abhängig von der gewünschten Ausgangstemperatur des Fluids an der Heizeindes Thermostaten bei einer Änderung der einzustellenden Ausgangstemperatur des Fluids.

Aus dem Blockschaltbild nach Figur 2 ist auch ersichtlich, daß dem PID-Regler 8 die Isttemperatur $T_{Hi}$ des Fluids am Ausgang 12 der Heizeinheit 9 sowie die Solltemperatur $T_{HS}$ aufgeschaltet ist. Der PID-Regler 8 regelt die gewünschte Temperatur so aus, daß das Fluid vom anschließenden Pufferbehälter 13 mit einer Abweichung von der Solltemperatur von ± 0,1 K entnehmbar ist.

Die Druckregelung des Kühlmittels erfolgt separat. Die für die Druckregelung erforderlichen Druckmeßstellen sind in Figur 1 nicht gesondert eingezeichnet. Im Blockschaltbild ist auch für den Regler $R_{19}$ das Aufschalten eines Drucksollwertes $P_S$ veranschaulicht. Die Einstellung des Druckes für das Kühlmittel wirkt sich auch auf die Kühlleistung sowohl im Wärmetauscher 15 als auch im Kühler 3 aus. Auf die Strecken $S_{15}$ und $S_3$ wirkt der Druck als Störgröße $P_Z$.

Wird der Kühler 3 mit Kühlmittel gespeist, dessen Eingangstemperatur regelbar ist, beispielsweise in einem Badthermostaten der das Kühlmittel vor Eintritt in den Kühler temperiert, so kann der Kühlregelkreis noch entsprechend vereinfacht werden.

Der erfindungsgemäße Thermostat ist bevorzugt für eine Teststrecke zur Bestimmung des thermischen Wirkungsgrades von Sonnenkollektoren geeignet. Der Thermostat regelt dort die Eingangstemperatur eines als Wärmeträger in den Sonnenkollektoren eingesetzten Fluids. Mit dem im Ausführungsbeispiel beschriebenen Thermostaten lassen sich am Ausgang des Pufferbehälters 14 Temperaturen im Bereich zwischen 20 und 100° C mit einer Genauigkeit von besser als - 0,1 K einstellen. Dabei wird das Fluid nach Erwärmung im Sonnenkollektor zum Eingang des Kühlers im Kreislauf zurückgeführt und im Kühler auf eine Temperatur unterhalb der Ausgangstemperatur an der Heizeinrichtung

gekühlt. Die Temperaturdifferenz $\Delta T_S$ zwischen der Solltemperatur $T_{HS}$ des Heizregelkreises und der Solltemperatur $T_{KS}$ des Kühlregelkreises wurde auf $\Delta T_S = 10$ K gehalten. Als tatsächliche Temperaturdifferenz $\Delta T$; zwischen den Isttemperaturen des Fluids am Ausgang der Heizeinrichtung und am Kühlerausgang stellte sich dann ein Betrag zwischen $\Delta Ti = 5$ bis 10 K ein. Die tatsächliche Temperaturdifferenz ist insbesondere vom Massenstrom des Fluids und von dessen Temperatur abhängig. Im Ausführungsbeispiel waren Massenströme im Bereich zwischen 60 bis 150 kg/h und entsprechende Fließgeschwindigkeit in Rohren von 0,10 bis 0,25 m/s einstellbar.

### Patentansprüche

1. Verfahren zur Einstellung einer konstanten Temperatur für ein Fluid mit geringem Massenstrom und geringer Fließgeschwindigkeit durch Aufheizen des Fluids beim Durchströmen einer Wärmequelle dadurch gekennzeichnet, daß das Fluid vor Einstellung der konstanten Temperatur mittels eines Kühlers auf eine über einen Kühlregelkreis einstellbare tieferliegende Temperatur gekühlt wird, und daß die dabei erreichte Temperaturdifferenz zwischen konstanter Temperatur und tieferliegender Temperatur größer ist als die Temperatur-Überschwingweite des Kühlregelkreises.

2. Thermostat zur Durchführung des Verfahrens nach Anspruch 1 mit einem Kühlregelkreis der einen als Rekuperator ausgebildeten Kühler aufweist, und mit einem Heizregelkreis mit einer Heizeinrichtung für ein auf eine konstante Temperatur einzustellendes Fluid, dadurch gekennzeichnet, daß Kühler (3) und Heizeinrichtung (9) in Strömungsrichtung des Fluids hintereinander geschaltet sind, und daß der Kühler (3) das Fluid (1) vor seiner Erwärmung in der Heizeinrichtung (9) auf eine Temperatur abkühlt, die unter der einzustellenden konstanten Temperatur liegt, und daß die dabei erreichte Temperaturdifferenz zwischen der Temperatur des Fluids am Kühlerausgang (10) und der am Ausgang (12) der Heizeinrichtung (9) eingestellten konstanten Temperatur größer ist als die Temperatur-Überschwingweite des Kühlregelkreises.

3. Thermostat nach Anspruch 2, dadurch gekennzeichnet, daß dem Kühlregelkreis eine Solltemperatur vorgegeben ist, die von der Isttemperatur des Fluids (1) am Ausgang (12) der Heizeinrichtung (9) abhängig ist.

4. Thermostat nach Anspruch 2 oder 3, dadurch gekennzeichnet, daß dem Kühler (3) nach Messung der Temperatur des Fluids am Kühlerausgang (10) ein vom Kühlmittel des Kühlers (3) und vom gekühlten Fluid (1) durchflossener Wärmetauscher (15) in Strömungsrichtung des Fluids (1) nachgeschaltet ist.

5. Thermostat nach Anspruch 2 oder 3, dadurch gekennzeichnet, daß der Kühler (3) mit einem auf eine Solltemperatur temperierbarem Kühlmittel gespeist wird.

6. Thermostat nach einem der vorhergehenden Ansprüche, dadurch gekennzeichnet, daß die Heizeinrichtung (9) in ihrem oberen Bereich einen Eingang (16) für das zu erwärmende Fluid und im unteren Bereich dessen Ausgang (12) aufweist.

7. Thermostat nach einem der vorhergehenden Ansprüche, dadurch gekennzeichnet, daß der Heizeinrichtung (9) in Strömungsrichtung des Fluids ein Pufferbehälter (14) nachgeschaltet ist.

### Claims

1. Method for constant temperature control of a fluid having a low mass flow and low flow velocity by heating up the fluid during its flow through a heat source, characterized in that the fluid, before the constant temperature is set, is cooled by means of a cooler to a lover temperature which can be set via a cooling control loop and that the temperature difference between constant temperature and lover temperature which can be achieved during this process is greater than the temperature overshoot range of the cooling control loop.

2. Thermostat for carrying out the method according to Claim 1, having a cooling control loop which exhibits a cooler constructed as a recuperator, and having a heating control loop with a heating device for a fluid to be set to a constant temperature, characterized in that the cooler (3) and heating device (9) are connected in series in the flow direction of the fluid, and that the cooler (3) cools the fluid (1), before it is heated in the heating device (9), to a temperature which is below the constant temperature to be set, and that the temperature difference between the temperature of the fluid at the cooler output (10) and the constant temperature set at the output (12) of the heating device (9), which is achieved during this process, is greater than the temperature overshoot range of the cooling control loop.

3. Thermostat according to claim 2, characterized in that a nominal temperature which is dependent on the actual temperature of the fluid (1) at the output (12) of the heating device (9) is predetermined for the cooling control loop.

4. Thermostat according to Claim 2 or 3, characterized in that, after measurement of the temperature of the fluid at the cooler output (10), the cooler is followed in the flow direction of the fluid (1) by a heat exchanger (15) through which the coolant of the cooler (3) and the cooled fluid (1) flow.

5. Thermostat according to claim 2 or 3, characterized in that the cooler (3) is fed with a coolant which can be temperature-controlled to a nominal temperature.

6. Thermostat according to one of the preceding claims, characterized in that the heating device (9) exhibits in its upper area an input (16) for the fluid to be heated and its output (12) in the lower area.

7. Thermostat according to one of the preceding claims, characterized in that the heating device (9) is followed in the flow direction of the fluid by a buffer container (14).

**Revendications**

1. Procédé pour régler une température constante pour un fluide ayant un faible courant massique et une faible vitesse d'écoulement, par chauffage du fluide en le faisant passer dans une source de chaleur, caractérisé en ce qu'il consiste, avant la mise à une température constante, à refroidir le fluide, au moyen d'un dispositif de refroidissement, à une température plus basse pouvant être réglée par un circuit de réglage du refroidissement, et en ce que la différence de température ainsi obtenue entre la température constante et la température plus basse est supérieure à l'écart maximum de température du circuit de réglage du refroidissement.

2. Thermostat pour la mise en oeuvre du procédé suivant la revendication 1, comprenant un circuit de réglage du refroidissement, qui comporte un dispositif de refroidissement constitué sous la forme d'un récupérateur, et un circuit de réglage du chauffage ayant un dispositif de chauffage pour un fluide à mettre à une température constante, caractérisé en ce que le dispositif de refroidissement (3) et le dispositif de chauffage (9) sont montés l'un derrière l'autre dans le sens d'écoulement du fluide, et en ce que le dispositif de refroidissement (3) refroidit le fluide (1) avant son réchauffement dans le dispositif de chauffage (9), à une température qui est inférieure à la température constante à établir, et en ce que la différence de température ainsi obtenue, entre la température du fluide à la sortie du dispositif de refroidissement (10) et la température constante établie à la sortie (12) du dispositif de chauffage (9), est supérieure à l'écart maximum de température du circuit de réglage du refroidissement.

3. Thermostat suivant la revendication 2, caractérisé en ce qu'une température de consigne, qui dépend de la température réelle du fluide (1) à la sortie (12) du dispositif de chauffage (9), est prescrite au circuit de réglage du refroidissement.

4. Thermostat suivant la revendication 2 ou 3, caractérisé en ce qu'en aval du dispositif de refroidissement (3), suivant le sens d'écoulement du fluide (1), et après la mesure de la température du fluide à la sortie du dispositif de refroidissement (10), est monté un échangeur de chaleur (15) dans lequel passent l'agent réfrigérant du dispositif de refroidissement (3) et le fluide refroidi (1).

5. Thermostat suivant la revendication 2 ou 3, caractérisé en ce que le dispositif de refroidissement (3) est alimenté en un agent réfrigérant, dont la température peut être mise à la température de consigne.

6. Thermostat suivant l'une des revendications précédentes, caractérisé en ce que le dispositif de chauffage (9) comporte, dans sa partie supérieure, une entrée (16) pour le fluide à réchauffer et, dans la partie inférieure, la sortie (12) de celui-ci.

7. Thermostat suivant l'une des revendications précédentes, caractérisé en ce qu'un réservoir-tampon (14) est monté en aval, dans le sens d'écoulement du fluide, du dispositif de chauffage (9).

# FIG. 1

# FIG. 2